# EUROPEAN PATENT SPECIFICATION

(11) **EP 2 991 945 B1**
(45) Date of publication and mention of the grant of the patent: **22.08.2018**
(21) Application number: 14729709.7
(22) Date of filing: 30.04.2014
(51) Int. Cl.: C04B 7/32

(54) **A METHOD FOR PRODUCING CEMENT**
VERFAHREN ZUR HERSTELLUNG VON ZEMENT
PROCÉDÉ POUR LA PRODUCTION DE CIMENT

(30) Priority: 30.04.2013 GB 201307828
(43) Date of publication of application: 09.03.2016
(73) Proprietor: Gulf Organisation for Research and Development, Doha (QA)
(72) Inventor: IMBABI, Mohammed, Aberdeen Aberdeenshire AB24 3UE (GB); GLASSER, Frederik P, Aberdeen Aberdeenshire AB24 3UE (GB); GALAN, Isabel, Aberdeen, Aberdeenshire AB24 3EU (GB)
(74) Representative: Williams, Paul Edwin
(86) International application number: PCT/GB2014/051331
(87) International publication number: WO 2014/177858

(56) References cited:
- WO-A1-2010/066811
- JP-A- 2002 187 750
- US-A1- 2004 118 323

## Description

The present invention relates to a method for producing cement, in particular a method of producing calcium sulfoaluminate cement.

The compound 4CaO.3Al₂O₃.SO₃, also known as Kline's compound and Ye'elemite, and abbreviated "C4A3$", is well known and has been used as the basis for forming expansive cements for a number of years.

C4A3$ is readily formed by calcination (heating) of appropriate amounts of CaO, (or equivalent CaCO₃), Al₂O₃ (or hydrates of alumina) and calcium sulphate (or its dihydrate, gypsum, or hemihydrate), typically at temperatures in the range 1000°C-1200°C. With careful attention to the granulometry and mixing of the reactants, high yields, >90% of theoretical of C4A3$, can be obtained by heating in 0.5-2 hours at ∼1300°C.

Kline's compound is crystalline, cubic or pseudocubic, with the ultramarine (sodalite) structure. Minor Fe for Al substitution is possible. The compound, when finely ground and mixed with water, is only weakly cementitious. However, around 1940 it was discovered that mixing Kline's compound with gypsum (calcium sulphate dihydrate) or "active anhydrite" (reactive calcium sulphate) greatly improved its cementing power.

In the 1960s, Chinese scientists began researching sulfoaluminate cements for construction applications. At that time China had a surplus of low-grade bauxite, the main source of alumina; its main impurities were iron oxide (and its hydrates), silica and titania. When low grade bauxites were mixed with limestone and calcium sulfate, ground and calcined at ∼1300°C, the resulting sinter contained mainly four minerals: dicalcium silicate, Kline's compound, anhydrite (calcium sulphate) and ferrite. "Ferrite" in this context refers to a solid solution based on dicalcium ferrite, Ca₂Fe₂O₅, in which up to 70% of the Fe may be replaced by Al.

Two of the constituent phases, dicalcium silicate, also known as belite, and ferrite, are also found in Portland cement. However, calcium sulfoaluminate cement is not a variant of Portland cement. The main mineral component of Portland cement is tricalcium silicate, "C3S". However C3S is not chemically compatible with C4A3$ and the two substances do not occur in the same clinker, although it is of course possible to make a physical mixture of two different types of cement. Work in China, since repeated elsewhere, shows that good cements can be made over a broad range, varying the amounts of the four minerals by changing the bulk composition.

Calcium sulfoaluminate clinker is normally made in a rotary kiln. The production is so similar to that of Portland cement that most of the commercial production in China was made in rotary kilns some of which have been converted from making Portland cement.

The resulting solid product emerging from the kiln, termed "clinker", is typically softer than Portland cement clinker and is therefore readily ground to high specific surface area, typically 2000-4000cm²/gram. Chinese standards were developed for this new generation of cements. The standards recognise different grades, but the general purpose product contains about 40-50% Kline's compound, 25-30% dicalcium silicate, 20-25% ferrite, and 5% impurity, including unconsumed reactants.

As with Portland cement, the dry mix, including cement and size-graded mineral aggregate, is mixed with water at or near the point of use. The resulting wet mix can, like Portland cement, be poured or pumped. A retarder needs to be added to prevent its immediate set and ensure a period of workability. This behaviour is also characteristic of Portland cement, to which several wt% gypsum or other reactive calcium sulfate is normally added at the final grinding stage. However, rather more sulphate should generally be added to sulfoaluminate cement, the optimum amount being a compromise between workability and the need to ensure that the product shrinks slightly during set. Chinese experience is to adjust the sulphate on a batch basis: the optimum addition is usually in the range 7-15 wt% anhydrite. The Chinese tend to use anhydrite rather than gypsum as the more readily available material.

Many cement manufacturers have sought to emulate the Chinese experience and have ended up with a range of formulations sometimes similar to those described above, although often mineral compositions have been tailored for special applications, e.g., tile setting cements. Notably, the Australian and European experience has been to concentrate on cements with relatively low C4A3$ contents and increase dicalcium silicate. This was done in an attempt to (i) place greater reliance on hydration of the silicate to achieve long-term strength and (ii) to enable use of lower grades of bauxite containing silica.

Calcium sulfoaluminate cements are used extensively as speciality cements to the coal mining and construction industries, for example in repair materials for conventional Portland cement construction, as well as in specialist formulations (e.g. self-levelling floor screeds and tile setting cements).

Concretes made with sulfoaluminate cement give corrosion protection to embedded steel, and the matrix has excellent resistance to saline groundwater attack.

The rapid strength gain of sulfoaluminate cements, as well as physical compatibility with Portland cement, are great advantages in formulating cements for specialised purposes. Another of the principal uses of sulfoaluminate cement is to control the dimensional stability of fresh Portland cement-based concretes. These tend to shrink in the course of strength gain. Some shrinkage facilitates demoulding but excessive shrinkage leads to cracking. The expansive tendencies of sulfoaluminate cement can be used to reduce or even eliminate the shrinkage occurring during set which is often characteristic of Portland cement.

The main constraints on the economic production of sulfoaluminate cement are three-fold: (i) ensuring adequate raw material supply, especially of alumina which is in increasingly short supply, (ii) further reducing the embodied CO₂ content of the clinker, and (iii) development of suitable standards and codes of practice for its use and familiarisation of architects, contractors and engineers with its properties. On account of its almost universal use, Portland cement serves as the benchmark for the production of sulfoaluminate cement. CO₂ production, using the most efficient plant, for Portland cement is about 850kg/tonne cement. Calcium sulfoaluminate cement, which can be used as direct replacement for Portland cement, has a CO₂ penalty about 500kg CO₂/tonne. Not surprisingly, most leading manufacturers in Europe and North America are or are planning to produce this cement.

As described above, calcium sulfoaluminate cement clinker is typically made in a rotary kiln using calcium oxide or carbonate, bauxite or other source of alumina and calcium sulphate, either gypsum or anhydrite. Additionally, the alumina source introduces some silica. The reactants are typically heated to ∼1200°C in the rotary kiln and the resulting clinker is ground with additional calcium sulphate to act as a set retarder. Thereafter it is stored, handled, mixed and emplaced like Portland cement. US2004/118323 discloses a process for incorporating coal ash into cement clinker as a replacement for calcium carbonate-containing feed material with the aim of reducing carbon dioxide emissions when the calcium carbonate thermally decomposes. The coal ash is derived from burning pulverised lignite of sub-bituminous coal. The thermal energy generated by burning the lignite is not used in the cement production process.

The present invention seeks to provide an improved method for producing calcium sulfoaluminate cement.

According to the present invention there is thus provided a method for producing calcium sulfoaluminate cement which comprises the steps of:
providing thermal energy by combustion of sulphur and/or a sulphur-containing compound;
reacting sulphur oxides produced by combustion of the sulphur and/or sulphur-containing compound with a mixture of calcium oxide and/or carbonate, and alumina and/or its hydrates to form a sulphur-containing mixture;
heating the sulphur-containing mixture using the thermal energy to produce a clinker; and
reacting remaining sulphur oxides produced by combustion of the sulphur and/or sulphur-containing compound with lime.

The present invention thus provides a method for producing calcium sulfoaluminate cement which does not entirely rely upon the combustion of hydrocarbon fuels for the provision of thermal energy, and thus results in reduced CO₂ emissions by comparison. The combustion of sulphur and/or a sulphur-containing compound (hereinafter for brevity referred to together as "sulphur") saves an estimated 100-200 kg CO₂/tonne: only the CO₂ from decarbonation of the source materials, for example limestone, is liberated. Whilst thermal energy used in the method of the present invention is provided by the combustion of sulphur, this may be supplemented as required by thermal energy provided by combustion of hydrocarbons, for example natural gas, to provide a heat boost.

In addition, sulphur oxides produced by the combustion of sulphur in the method of the present invention are removed from the discharge gasses, and incorporated back into the process. Other sulphur sources such as sulphates may supplement the sulphur oxides produced by combustion.

Thus, in the present invention thermal energy is provided by combustion of sulphur. In preferred embodiments, sulfur combustion partially replaces fossil fuel combustion for use in the reaction, for example in a kiln or calciner. The sulphur is preferably elemental sulphur, but any suitable source of sulphur may be used, for example sour crude or sour gas, and calcium sulfate. However, the use of elemental sulphur is preferred since it is a hazardous waste byproduct, for example from natural gas purification, which has to be stored as such, and is a fire hazard. The heat of combustion of sulphur is comparable with that of hydrocarbons and combustion gives an adequate flame temperature, i.e. a flame temperature sufficient to heat the reactants to temperatures such that the mineral precursors react with each other as well as with hot gas so as to develop the desired solid phases within a reasonable reaction time, for example a few minutes to a few hours. Sulphur burners are commercially available, as used for example in sulphuric acid production. Sulphur oxides may comprise 5-15 mol% of the combustion gases.

The sulphur oxides produced by combustion of the sulphur are reacted with a mixture of calcium oxide and/or carbonate, and alumina and/or its hydrates, to provide a source of sulphur for the calcium sulfoaluminate cement. This may occur, for example, in a suspension or cyclone pre-heater which is used to de-carbonate the raw materials, such as limestone (for example, at a temperature from 750-900°C), and to react them with the sulphur oxides in the combustion gasses. This enriches the solid feed with sulphur, so that the resulting clinker preferably contains 8-10 wt% sulphur (as SO₃ in calcium sulfoaluminate/Kline's compound), with an overall SO₃ content in the clinker of, for example, 3-5 wt%. Sulphur dioxide, SO₂, reacts spontaneously with excess oxygen and solids (e.g. lime, alumina) to form calcium sulfoaluminate.

Any suitable source of alumina may be used, for example bauxite, aluminous shale, or any other suitable aluminum-bearing material or mineral.

The enriched solid feed is then calcined, for example in a rotary kiln or other suitable calcination apparatus, such as a fluid bed. Calcination may occur at a temperature of 1000-1200°C or higher, for example 1300°C, and may take place over a period of, for example, 30 minutes to 2 hours. Alternatively, flash calcination may be used, in which the solid feed is calcined at a higher temperature, for example, of 1250 to 1350°C, for a period of tens of seconds, for example 30 seconds to a minute.

The resulting clinker produced by calcination is then preferably ground to form the cement. Other additives may be included, such as calcium sulphate or gypsum, which acts as a set retarder. The cement produced by the method of the present invention may be used as an additive to OPC (i.e. in a calcium sulfoaluminate/OPC hybrid) to confer beneficial properties to the OPC, for example early strength and reduced permeability.

Remaining sulphur oxides produced by combustion of the sulphur, i.e. sulphur oxides which are not reacted with the mixture of calcium oxide and/or carbonate, and alumina and/or its hydrates, are reacted with lime, either as a dry process to produce calcium sulfate anhydrite, or as a wet process with water to produce gypsum. In preferred methods, before their discharge the combustion gasses are passed through a lime injector/scrubber, as are commonly found in cement plants to comply with clean air regulations. Preferred methods use a wet scrubbing process, since the collected solid is rich in gypsum which, as noted above, may subsequently be interground with clinker to control set times and achieve dimensional stability of the hardened cement. The amount of gypsum to be added is, for example, 5-15 wt%, preferably 8-10 wt%.

Thus, the waste sulphur product is incorporated in stable and useful solids, and CO₂ discharges are reduced.

The present invention will now be described in detail with reference to the accompanying drawing, in which:

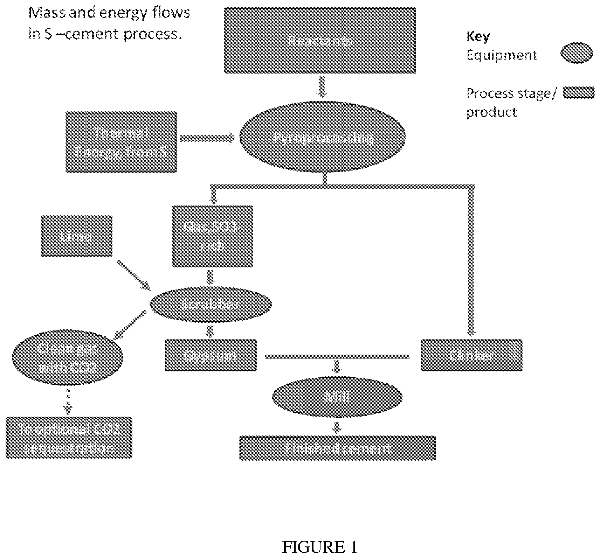

Figure 1 is a flow-diagram illustrating the method of the present invention.

Thus, as illustrated by Figure 1, in the present invention, thermal energy is provided by combustion of sulphur, preferably elemental sulphur. In preferred embodiments, the sulphur oxides produced by combustion of the sulphur are reacted in a suspension or cyclone pre-heater with a mixture of calcium oxide and/or carbonate, and alumina and/or its hydrates, to provide a source of sulphur for the calcium sulfoaluminate cement. This may occur, for example, at a temperature from 750-900°C. This enriches the reactants with sulphur, so that the resulting clinker preferably contains 8-10 wt% sulphur (as SO₃ in calcium sulfoaluminate/Kline's compound).

In addition to the sulphur oxides generated by combustion of sulphur as described above, sulphur may optionally be added directly to the other reagents, for example by injection into the rotary kiln during calcination (see below), or injection through multiple entry points.

The enriched solid feed is then calcined, for example in a rotary kiln or other suitable calcination apparatus, such as a fluid bed, to form clinker. Calcination may occur at a temperature of 1000-1200°C or higher, for example 1300°C, and may take place over a period of for example 30 minutes to 2 hours. Alternatively, flash calcination may be used, in which the solid feed is calcined at a higher temperature, for example, of 1250 to 1350°C, for a period of tens of seconds, for example 30 seconds to a minute.

The resulting clinker produced by calcination is then preferably ground to form the cement, preferably in a mill. Other additives may be included, such as calcium sulphate or gypsum which acts as a set retarder.

Remaining sulphur oxides produced by combustion of the sulphur, i.e. sulphur oxides which are not reacted with the mixture of calcium oxide and/or carbonate, and alumina and/or its hydrates, are reacted with lime, either as a dry process to produce calcium sulfate anhydrite, or as a wet process with water to produce gypsum, preferably by passing through a lime injector/scrubber. With a wet scrubbing process the collected solid is rich in gypsum which may subsequently be interground with clinker to control set times and achieve dimensional stability of the hardened cement. The amount of gypsum to be added is preferably 8-10 wt%.

The scrubbed discharge gases are substantially free of sulphur oxides, and contain a reduced amount of carbon dioxide.

## Claims

1. A method for producing calcium sulfoaluminate cement which comprises the steps of:
providing thermal energy by combustion of sulphur and/or a sulphur-containing compound;
reacting sulphur oxides produced by combustion of the sulphur and/or sulphur-containing compound with a mixture of calcium oxide and/or carbonate, and alumina and/or its hydrates to form a sulphur-containing mixture;
heating the sulphur-containing mixture using the thermal energy to produce a clinker; and
reacting remaining sulphur oxides produced by combustion of the sulphur and/or sulphur-containing compound with lime.

2. A method according to claim 1 wherein the sulphur and/or sulphur-containing compound comprises elemental sulphur, sour crude, sour gas or calcium sulfate.

3. A method according to claim 1 or 2 wherein sulphur oxides comprise 5-15 mol% of the combustion gases.

4. A method according to any one of claims 1 to 3 wherein the sulphur oxides produced by combustion of the sulphur and/or sulphur-containing compound are reacted with the mixture of calcium oxide and/or carbonate, and alumina and/or its hydrates in a suspension or cyclone pre-heater.

5. A method according to any preceding claim wherein the sulphur oxides produced by combustion of the sulphur or sulphur-containing compound are reacted with the mixture of calcium oxide and/or carbonate, and alumina and/or its hydrates at a temperature from 750-900°C.

6. A method according to any preceding claim wherein the sulphur-containing mixture is heated in a rotary kiln to produce the clinker.

7. A method according to any preceding claim wherein the sulphur-containing mixture is heated at a temperature of 1000-1300°C to produce the clinker.

8. A method according to any preceding claim wherein the sulphur-containing mixture is heated over a period of 30 minutes to 2 hours to produce the clinker.

9. A method according to any one of claims 1 to 6 wherein sulphur-containing mixture is heated at a temperature of 1250 to 1350°C for a period of 30 seconds to a minute to produce the clinker.

10. A method according to any preceding claim wherein sulphur oxides produced by combustion of the sulphur which are not reacted with the mixture of calcium oxide and/or carbonate, and alumina and/or its hydrates are reacted with lime, either as a dry process to produce calcium sulfate anhydrite, or as a wet process with water to produce gypsum.

11. A method according to claim 10 wherein the sulphur oxides are reacted with lime as a wet process with water to produce gypsum.

12. A method according to claim 10 or 11 wherein the sulphur oxides are reacted with lime by passing through a lime injector/scrubber.

13. A method according to any preceding claim wherein the source of alumina and/or its hydrates comprises bauxite or aluminous shale.

14. A method according to any preceding claim wherein additional sulphur and/or a sulphur-containing compound is added to the other reagents.

## Patentansprüche

1. Ein Verfahren für die Herstellung von Calciumsulfoaluminat-Zement, das die folgenden Schritte umfasst:
Das Bereitstellen von thermischer Energie durch Verbrennen von Schwefel und/oder schwefelhaltigen Verbindungen;
das Reagieren der Schwefeloxide, die durch das Verbrennen des Schwefels und/oder der schwefelhaltigen Verbindung entstanden sind, mit einer Mischung aus Calciumoxid und/oder Carbonat, und Aluminiumoxid und/oder seinen Hydraten, um eine schwefelhaltige Mischung zu bilden;
das Erwärmen der schwefelhaltigen Mischung unter Verwendung von thermischer Energie, um einen Klinker herzustellen; und
das Reagieren der verbleibenden Schwefeloxide, die durch das Verbrennen des Schwefels und/oder der schwefelhaltigen Verbindung entstanden sind, mit Kalk.

2. Ein Verfahren nach Anspruch 1, wobei der Schwefel und/oder die schwefelhaltige Verbindung elementaren Schwefel, schwefelhaltiges Rohöl, schwefelhaltiges Gas oder Calciumsulfat umfassen.

3. Ein Verfahren nach Anspruch 1 oder 2, wobei die Schwefeloxide 5-15 Mol-% der Verbrennungsgase umfassen.

4. Ein Verfahren nach einem der Ansprüche 1 bis 3, wobei die Schwefeloxide, die durch das Verbrennen des Schwefels und/oder der schwefelhaltigen Verbindung entstanden sind, mit der Mischung aus Calciumoxid und/oder Carbonat, und Aluminiumoxid und/oder seinen Hydraten in einer Suspension oder einem Zyklonvorwärmer reagieren.

5. Ein Verfahren nach einem der vorhergehenden Ansprüche, wobei die Schwefeloxide, die durch das Verbrennen des Schwefels oder der schwefelhaltigen Verbindung entstanden sind, mit der Mischung aus Calciumoxid und/oder Carbonat, und Aluminiumoxid und/oder seinen Hydraten bei einer Temperatur von 750 - 900 °C reagieren.

6. Ein Verfahren nach einem der vorhergehenden Ansprüche, wobei die schwefelhaltige Mischung in einem Drehofen erwärmt wird, um den Klinker zu erzeugen.

7. Ein Verfahren nach einem der vorhergehenden Ansprüche, wobei die schwefelhaltige Mischung bei einer Temperatur von 1000-1300 °C erwärmt wird, um den Klinker zu erzeugen.

8. Ein Verfahren nach einem der vorhergehenden Ansprüche, wobei die schwefelhaltige Mischung über einen Zeitraum von 30 Minuten bis 2 Stunden erwärmt wird, um den Klinker zu erzeugen.

9. Ein Verfahren nach einem der Ansprüche 1 bis 6, wobei die schwefelhaltige Mischung für 30 Sekunden bis eine Minute bei einer Temperatur von 1250 bis 1350 °C erwärmt wird, um den Klinker zu erzeugen.

10. Ein Verfahren nach einem der vorhergehenden Ansprüche, wobei die Schwefeloxide, die durch das Verbrennen des Schwefels entstanden sind und nicht mit der Mischung aus Calciumoxid und/oder Carbonat reagiert wurden, und Aluminiumoxid und/oder seinen Hydraten mit Kalk reagieren, entweder als Trockenverfahren, um Calciumsulfat-Anhydrit zu erzeugen, oder als Nassverfahren mit Wasser, um Gips zu erzeugen.

11. Ein Verfahren nach Anspruch 10, wobei die Schwefeloxide mit Kalk reagieren, in einem Nassverfahren mit Wasser, um Gips zu erzeugen.

12. Ein Verfahren nach Anspruch 10 oder 11, wobei die Schwefeloxide mit Kalk reagieren, indem sie durch einen Kalk-Injektor/Abscheider geleitet werden.

13. Ein Verfahren nach einem der vorhergehenden Ansprüche, wobei die Quelle des Aluminiumoxids und/oder seiner Hydrate Bauxit oder aluminiumhaltigen Schiefer umfasst.

14. Ein Verfahren nach einem der vorhergehenden Ansprüche, wobei den anderen Reagenzien zusätzlicher Schwefel und/oder eine schwefelhaltige Verbindung hinzugefügt wird.

## Revendications

1. Procédé destiné à produire un ciment au sulfoaluminate calcium qui comprend les étapes suivantes :
produire de l'énergie thermique par la combustion de soufre et/ou d'un composé contenant du soufre ;
faire réagir les oxydes de soufre produits par la combustion du soufre et/ou le composé contenant du soufre avec un mélange d'oxyde de calcium et/ou de carbonate de calcium et d'alumine et/ou de ses hydrates pour former un mélange contenant du soufre ;
chauffer le mélange contenant du soufre à l'aide de l'énergie thermique pour produire une scorie de ciment ; et
faire réagir avec de la chaux les oxydes de soufre restants produits par la combustion du soufre et/ou le composé contenant du soufre.

2. Procédé selon la revendication 1, dans lequel le soufre et/ou le composé contenant du soufre comprennent du soufre élémentaire, du brut sulfureux, du gaz sulfureux ou du sulfate de calcium.

3. Procédé selon la revendication 1 ou 2, dans lequel les oxydes de soufre comprennent de 5 à 15 mol% de gaz de combustion.

4. Procédé selon l'une quelconque des revendications 1 à 3, dans lequel les oxydes de soufre produits par la combustion du soufre et/ou le composé contenant du soufre sont mis en réaction avec le mélange d'oxyde de calcium et/ou de carbonate de calcium et d'alumine et/ou de ses hydrates dans un dispositif de préchauffage à suspension ou de type cyclone.

5. Procédé selon l'une quelconque des revendications précédentes, dans lequel les oxydes de soufre produits par la combustion du soufre et/ou le composé contenant du soufre sont mis en réaction avec le mélange d'oxyde de calcium et/ou de carbonate de calcium et d'alumine et/ou de ses hydrates à une température de 750-900 °C.

6. Procédé selon l'une quelconque des revendications précédentes, dans lequel le mélange contenant du soufre est chauffé dans un four rotatif pour produire de la scorie de ciment.

7. Procédé selon l'une quelconque des revendications précédentes, dans lequel le mélange contenant du soufre est chauffé à une température de 1 000-1 300 °C pour produire de la scorie de ciment.

8. Procédé selon l'une quelconque des revendications précédentes, dans lequel le mélange contenant du soufre est chauffé au cours d'une période de 30 minutes à 2 heures pour produire de la scorie de ciment.

9. Procédé selon l'une quelconque des revendications 1 à 6, dans lequel mélange contenant du soufre est chauffé à une température de 1 250 à 1 350 °C pendant une période de 30 secondes à une minute pour produire de la scorie de ciment.

10. Procédé selon l'une quelconque des revendications précédentes, dans lequel les oxydes de soufre produits par la combustion du soufre qui n'ont pas réagi avec le mélange d'oxyde de calcium et/ou de carbonate de calcium et d'alumine et/ou de ses hydrates sont mis en réaction avec la chaux, soit comme un processus par voie sèche pour produire de l'anhydrite de sulfate de calcium, ou comme un processus par voie humide avec de l'eau pour produire du gypse.

11. Procédé selon la revendication 10, dans lequel les oxydes de soufre sont mis en réaction avec la chaux comme un processus par voie humide avec de l'eau pour produire du gypse.

12. Procédé selon la revendication 10 ou 11, dans lequel les oxydes de soufre sont mis en réaction avec la chaux en passant à travers un injecteur/nettoyeur de chaux.

13. Procédé selon l'une quelconque des revendications précédentes, dans lequel la source d'alumine et/ou ses hydrates comprennent de la bauxite ou du schiste alumineux.

14. Procédé selon l'une quelconque des revendications précédentes, dans lequel le soufre supplémentaire et/ou le composé contenant du soufre sont ajoutés aux autres réactifs.
